# EUROPEAN PATENT APPLICATION

(11) **EP 0 993 776 A1**
(43) Date of publication of application: **19.04.2000**
(21) Application number: 99203022.1
(22) Date of filing: 16.09.1999
(51) Int. Cl.: A01N 3/02, A01N 57/20, A01N 45/00, A01N 43/90

(54) **Composition for the treatment of cut tulip flowers**

(30) Priority: 16.09.1998 EP 98203100
(71) Applicant: Instituut voor Agrotechnologisch Onderzoek (ATO-DLO), 6700 AA Wageningen (NL)
(72) Inventor: Van Doorn, Wouter, 6816 RW Arnhem (NL); Perik, René, 6708 PP Wageningen (NL)
(74) Representative: de Bruijn, Leendert C.

(57) **Abstract**

The invention provides a floral composition suitable for preventing rapid stem elongation and prolonging vase life of cut tulips, comprising (A) an ethylene-releasing compound or ethylene precursor, (B) a gibberellin, and (C) a cytokinin, the molar ratio (A) : (B) being between 0.1 and 2, the molar ratio (A) : (C) being between 0.3 and 5, and the molar ratio (B) : (C) being between 0.5 and 10, and optionally (D) calcium chloride, with a molar ratio (A) : (D) between 0.002 and 0.03.

## Description

The present invention provides for the inhibition of rapid elongation of stems of cut tulip flowers, which can therefore be on display and sold for a longer time when stored in water close to room temperature in retail outlets, and will not rapidly hang out of the vase during the consumer phase. The invention furthermore delays the onset of leaf yellowing, and the visual symptoms of petal senescence, thereby prolonging the vase-life of the flowers.

### Background of the invention

The vase life of cut tulips is very short due to a combination of factors such as leaf yellowing, and the rapid discoloration and wilting of the petals. In a few cultivars the petals fall prematurely. Many tulip flowers also show considerable stem elongation when placed in water, which results in bending of the stem. For most market segments this is a considerable drawback. Tulips, for example are rarely included in mixed bouquets as they will rapidly grow out of it, and thus detract from its aesthetic value. Furthermore, the display life of tulips in supermarkets, where they are stored close to room temperature, is short due to rapid stem elongation. When the stems have become too long, the consumers are no longer interested in their purchase as the flowers have the appearance of being too old. After about two days of display life, supermarkets therefore have to discard unsold tulips.

Tulip stems, placed in water after harvest, are known to grow particularly in the uppermost part of the stem, and this growth is highest during the first two or three days of placing them in water.

The cut flower trade is interested in tulips which have a longer vase-life and do not exhibit excessive stem elongation and stem bending. This can be achieved by treating the flowers with chemicals that delay the expression of the unwanted symptoms. Thus far, no such a treatment has been applied in practice, indicating that any of the solutions provided by research have not been adequate.

The literature indicates that stem elongation in tulips can be reduced by compounds that inhibit gibberellin synthesis, such as ancymidol (A.E. Einert (1971) *HortScience* 6, 459), and by compounds that release ethylene, such as ethephon ((2-chloroethyl)phosphonic acid) (R. Moe (1980) *Acta Hortic*. 109, 197; R. Nichols and A.M. Kofranek (1982) *Scientia Hortic*. 17, 71). The compound ACC (1-aminocyclopropane-1-carboxylic acid), for example, which is the precursor of ethylene biosynthesis in plants, could also be used for this purpose. Furthermore, stem elongation growth can be decreased by compounds that inhibit the synthesis, action or transport of auxins, a class of plant hormones. Any of these compounds, however, when applied to tulip flowers have, when they adequately inhibit stem elongation, a number of negative side effects. The main effect is that the growth of the flower bud is inhibited to the extent that the flowers do not open. Inhibition of elongation growth, therefore, is an effect that seems to act generally, including the cell elongation processes required for flower opening.

Tulip flowers often have a short vase life, apart from the problem of the long stems, due to early leaf yellowing. The literature indicates methods to prevent such early leaf yellowing in cut flowers. It can often be delayed by a compound belonging to the cytokinins or gibberellins, two other groups of plant hormones. It depends on the species whether a cytokinin or a gibberellin is most effective (Halevy, A.H. and S. Mayak (1979) *Hortic*. *Reviews* 1, 204, and ibid (1981)*Hortic*. *Reviews* 3, 59). When these compounds are used for cut tulips, however, leaf yellowing may be delayed but other serious problems arise. When a gibberellin is used, elongation of the stems is much increased, thus it adds to the problem of the long stems. When a cytokinin is used at concentration that inhibits leaf yellowing, the stems often show browning, apparently due to a toxic effect. This results in microbial growth in the vase water, inhibition of water uptake, leaf wilting, lack of flower opening, and early flower wilting. These two classes of compounds can, therefore, not be used. Alternatives to them are not available.

The discoloration, wilting, and fall of the petals (collectively called petal senescence) is another problem in cut tulips. The literature indicates that these symptoms, in cut flowers in general, can be delayed by placing the stems in a sugar solution, usually combined with an antibacterial compound. Petal wilting and petal fall can also be prevented, depending on the species, with compounds that interact with the plant hormone ethylene, in flowers in which petal senescence is ethylene-sensitive, or with compounds that belong to the cytokinins or the gibberellins (Halevy, A.H. and S. Mayak (1979) *Hortic*. *Reviews* 1, 204, and (1981) *Hortic*. *Reviews* 3, 59). Petal discoloration and wilting in tulip flowers is ethylene insensitive as specific inhibitors of ethylene synthesis or ethylene action have no effect. Sugars combined with an antibacterial compound have little effect on petal colour and wilting, and often lead to sudden breaking of the stems just under the flower head. Cytokinins were found to appreciably delay petal senescence, and gibberellins to have a smaller positive effect. The application of cytokinins or gibberellins, however, produces negative side effects, as described above. None of the compounds that might delay senescence can therefore be applied, as they have little effect or produce negative side-effects.

The problems of cut tulip flowers, therefore, can apparently not be solved by a treatment with any of the compounds that, according to the literature, mitigate these problems in other cut flowers.

### Description of the invention

The present invention is based on the finding that tulip stem elongation can be adequately inhibited and the length of tulip vase life considerably increased by a combination of chemicals, either to be used directly after harvest (using a short pulse treatment with relatively high concentrations of the chemicals), or to be included in the aqueous solution in which the flowers are placed for a longer period of time (using lower concentrations), prior to the display of the flowers in retail outlets. The three chemicals, which have negative effects when applied singly, have a positive effect when applied in combination. One (neutral) additional compound can be added to these compounds in order to fully counteract possible negative side-effects of these three compounds.

The combination of chemicals used in the present invention comprises: an ethylene-releasing compound such as ethephon or an ethylene precursor such as 1-amino-cyclopropanecarboxylic acid (ACC), a gibberellin plant growth substance such as gibberellic acid (GA3), and a cytokinin plant growth substance such as kinetin (furfuryl-adenine), zeatin (hydroxyisoprenyl-adenine), isopentenyl-adenine or, especially, benzyladenine. A calcium salt such as and calcium chloride may further be used. The relative and absolute amounts of these substances and further preferred embodiments are defined in the appending claims.

The literature indicates that the vase life of tulips is not extended by the inclusion, in the vase water, of a sugar, an antibacterial compound, a gibberellin (GA3) and ethephon (A.J. Lukaszewska (1995) *Acta Hortic*. 405, 351). In other literature, it is suggested that this combination confers a positive effect (T.R. Pisulewski, D.M. Goszczynska, and R.M. Rudnicki (1989) *Rosliny Ozdobne*, *Prace ISjK*, ser. B.T. 14, 155, and virtually similar paper by the same authors, also published in 1989, in *Acta Hortic*. 251, 115). A.J. Lukaszewska (1995, supra) repeated the experiments of Pisulewski et al. (1989, supra) and found no positive effect on the length of the vase-life. The present inventors similarly observed that this combination of chemicals is not adequate for a good vase-life as it produces problems with flower opening, and it does not prevent the yellowing of the leaf blade.

The use of ethephon and a gibberellic acid, applied prior to vase life at the consumer, when using concentrations that adequately prevent stem elongation, precludes the fill opening of the flower bud. The inclusion of a cytokinin (for example benzyladenine) counteracts this negative effect. However, the presence of benzyladenine results in browning of the lower stem end. This negative effect can be fully counteracted by the inclusion of calcium ions in the solution. When a pulse treatment is given, therefore, two compounds have to be added, in order to obtain a long vase life with a minimum of stem elongation.The sugar and the antibacterial compound can be left out, as their effect on vase life is marginal.

As briefly described, the compounds ethephon, gibberellic acid, and the cytokinin (benzyladenine) have a negative effect when given alone, as they are toxic (produce visible symptoms of tissue damage) or have other negative effects on flower quality:

Ethephon or another ethylene-releaser, which is required for inhibiting stem elongation, when given alone, results in early leaf yellowing (sometimes in leaf damage), prevents opening of the flower buds, results in discoloration of the petals, in rapid abscission (fall) of the petals in some tulip cultivars, and sometimes results in fungus infection. These side effects of ethephon are counteracted by the joint presence of a gibberellic acid and a cytokinin (benzyladenine is preferred according to the invention, but other cytokinins - such as kinetin - are also effective).

A gibberellin is required for preventing leaf yellowing which starts at the tips and subsequently spreads downwards towards the leaf base. It delays flower wilting. It is also required to counteract many of the negative effects of ethephon. It prevents stem damage and results in clearer vase water. It delays flower wilting. Given by itself it increases elongation growth of the stems, hence results in worsening of the bending problem.

Benzyladenine or another cytokinin is required for preventing early yellowing which occurs throughout the leaf blade, and is also essential for overcoming the negative effects of ethephon. It delays wilting of the petals. The requirement for a cytokinin in the treatment is borne out from the observation that the flowers do no open properly after the ethephon and gibberellic acid treatment, and that the leaf blades start yellowing in a way that differs from the yellowing which is delayed by the gibberellin. However, it often results in stem damage: during vase life the stems become brown and shrivel at their ends. This results in inadequate water uptake which is expressed by loss of turgor in the leaves. The water stress results in premature wilting of the flowers and lack of flower growth and opening. Cultivars are found to differ in their sensitivity to this toxic effect. The toxic effect of benzyladenine is found both when it is added to a mixture of ethephon and GA3 and when it is given by itself.

The benzyladenine-induced stem browning and its consequences are all completely prevented by the inclusion of calcium ions in the treatment. Calcium ions have, by themselves, no negative effect.

After the tulips are harvested, they are usually transported dry to the flower auctions or to the wholesaler, and then again transported dry to the retailers. An increasing number of tulip flowers is transported directly from growers to the retail outlets. During dry transport, stem elongation is usually absent or very restricted, at least when the transport temperatures are kept low. Whenever the temperature is not held rather low, the flowers start to produce extra heat themselves, and start growing. Flowers that are placed in water, at least when they are not held at low temperatures, even grow rapidly. Such a condition usually exists in retail outlets. When the tulips are not sold within two days they are usually too long to be acceptable, and thus must be discarded. A chemical treatment meant to inhibit stem elongation, therefore, must be applied either directly after harvest, or must be included in the water whenever the stems are placed in water, before the time they are on display to be sold. Flowers cannot be treated when on display as some bunches will be rapidly sold and the duration of treatment will then be too short to be effective in producing a longer vase-life. The sales of tulip flowers in supermarkets, compared to small retail businesses, is rapidly increasing, and supermarket management usually prefers easy handling of the produce, hence prefers a treatment that is given directly after harvest rather than treatment in the supermarket. In most practical situations therefore, a short pulse treatment, directly after harvest, will be preferred.

The above preference for treatment directly after harvest applies to the sales of tulips in one-species bouquets. When tulips are to be included in mixed-species bouquets, they must also be treated prior to their inclusion in these bouquets, as compounds that inhibit stem elongation such as ethephon, are well known to be detrimental to the life of other cut flowers, hence cannot be used for inclusion in the water in which mixed bouquets are placed. Mixed bouquets are often produced shortly after sale in flowers auctions, at the premises of wholesalers. This implies that the tulip flowers meant for inclusion in mixed bouquets have to be treated early on during the distribution chain.

Despite the above considerations, which argue for a pulse treatment shortly after harvest, it is conceivable that for certain distribution chains the tulips are to be treated by auctions, transport companies, wholesalers, or retailers. This treatment can either be short (1-18 h pulse) or longer (1.5-3 days) or even for the whole vase life. The present invention also addresses this longer period of treating the flowers. For the pulse treatment a concentration of 0.14-0.52 mM ethylene donor or ethylene precursor (A), 0.2-1.5 mM gibberellin (B), 0.1-0.5 mM cytokinin (C) and optionally 3-50 mM of a calcium salt can be used. For very short treatments of less than 1 hour, even higher levels, e.g up to 1.0 mM (A), 2.5 mM (B), 1.0 mM (C) and 100 mM calcium can be applied. For the intermediate treatment of between 18 and 72 hours a concentration of 0.07-0.24 mM (A), 0.1-1.0 mM (B), 0.05-0.25 mM (C) and optionally 1-20 mM of a calcium salt is preferred, while for a treatment until discarding the tulips a concentration of 0.04-0.10 mM (A), 0.2-0.5 mM (B), 0.01-0.05 mM (C) and optionally 1-20 mM of a calcium salt may be used. The invention also encompasses aqueous solutions containing these concentrations or a multiple thereof suitable for being diluted to the required concentrations. The treatment can also be applied at the consumer level. However, here it will probably be less effective as many consumers do not apply the treatment, and the treatment usually comes too late, as the stems have already started growing, and the processes of leaf yellowing and petal senescence have already started, both during transport to the retail shops and during the period of flower display in the retail shops.

The invention involves the inhibition of elongation growth, up to the time the consumer places the flowers in a vase, and the subsequent partial overcoming of this inhibition. The latter allows a) the flower to open properly and b) allows the stems to move with respect to gravity, whereby the stem segment just under the flower head becomes vertical rather than staying at the angle in which the stems are placed in the vase. This movement is important in any bouquet of tulips, and is a characteristic which the consumers fully expect. The contradictory requirement of full inhibition of growth prior to the consumer phase, and its partial reversal during vase-life is another essential advancement provided by the invention.

The composition according to the invention has been found to result in adequate inhibition of stem elongation and in a much longer vase life in a number of tulip cultivars such as Golden Apeldoorn, Yokohama, Monte Carlo (yellow petals), Cassini, Abba (red petals), White Dream (white petals), Leen van der Mark (petals red and white), Barcelona (pink), and Negrita (purple). The vase life of these cultivars has also been evaluated after a simulation of transport. A pulse treatment shortly after harvest was followed by keeping the flowers dry for 48 hours at 5°C. The flowers were wrapped in unperforated plastic sleeves, 12 flowers per bunch. The number of days these flowers remained in acceptable condition when held in water at 20°C was, depending on the experiment, about 10 or 11 days. Acceptable condition is here defined as the condition in which the stems do not bend to below horizontal, the leaves remain green, and the flower heads open and look fresh. These results mean that the flowers of these cultivars can be held in the retail outlet at 20°C for 4 days and still have about seven days of vase life at the consumer. The results also show that in all the major colour groups of cut tulips, cultivars can be found with a remarkable positive effect of the pulse treatment. Other cultivars tested, where the pulse treatment had a similar positive effect were: Angelique, Christmas Dream, Estella Reinfeld, and Ruby Red.

In a number of other cultivars, the improvement of vase life by the treatment, although considerable, was not as long as reaching 10 or 11 days, but varied between 8 and 10 days. These cultivars include Anna Lundgren, Arma, Bastogne, Casa Blanca, Lucky Strike, Prominence, and Recreado.

In preliminary experiments in a few cultivars, such as Ad Rem, Christmas Marvel, and Lustige Witwe, the treatment resulted in a slight discoloration of the petals, which may or may not be considered a negative side effect. In some cultivars such as Gander's Rhapsody the petals fell prematurely. Additionally, in some cultivars, such as Ad Rem and Pink Impression, the standard treatment did not adequately inhibit elongation growth. The treatment, therefore, should not be applied without detailed testing of the cultivars, adn, if necessary, adaptation of the required concentrations of the various chemicals.

It should be noted that the present pulse treatment has a very positive effect on the inhibition of stem elongation and on the other parameters of vase life in the cultivar Golden Apeldoorn. This is in contrast to the vase life treatment developed by Pisulewski et al. (1989, supra), which had no effect when applied to the cultivar Golden Apeldoorn, as reported by Lukaszewska (1995, supra).

In treatments to prolong vase life of flowers, loading of the flowers with adequate amounts of the various chemicals is required. An individual flower must take up, usually with the uptake of water, a certain minimum amount of chemical, but not too much as this will result in negative side-effects. The concentrations used in the aqueous treatment solution thus depend on the duration of treatment, and on the limits between no effect and a negative side effect.

In the present treatment the ratio between the concentration of the various chemicals is important, as the negative side effects of a compound must be counteracted with an adequate amount of the other chemicals. The optimum ratio, however, depends on the tulip cultivar. In the examples the ratios used are a generalisation, adapted to the cultivars, mentioned above, in which the treatment has a relatively large effect on the display life and the vase life.

### Example 1.

This example refers to a short treatment of the flowers. Due to the short treatment duration this treatment involves a relatively high concentration of all chemicals. The treatment can be applied shortly after harvest, and also at a later point in time, provided that the stems have not yet elongated too much. In the example the pulse treatment lasted for 6 hours.

Tulip flowers (*Tulipa gesneriana*, cv. Leen van der Mark) are harvested in the morning, held in water for 4 hours at room temperature, then held dry for 2 hours at room temperature. They are pulse-treated in groups of 12 stems at 20°C for 6 hours in the following solution: 0.14-0.52 mM ethephon, 0.2-1.5 mM gibberellic acid (GA3), 0.1-0.5 mM beuzyladenine, and 3-50 mM calcium chloride.

The flowers are then sleeved in transparent plastic without perforations, in bunches of 12 stems, and held dry at 5°C for 48 hours. Subsequently, the flowers are individually placed at 20°C in demineralised water or tap water. The photon flux (from fluorescent lamps) is 15 micromoles per square metre, with the lamps being turned on for 12 subsequent hours per day and the flowers held in darkness for the remaining 12 hours. Alternatively, the photon flux is due to the natural light that enters a window. The relative humidity is held at 60% or is the ambient humidity. Control flowers are pulsed for 6 hours in water, or are not pulsed.

The elongation growth of the control stems, during the period in water, is, in most experiments, about 13 cm, and after a few days the stems hang down. The flower heads often bend so much that they touch the table on which the flower vases are placed. The rate of elongation growth and thus the time to stem drooping depends on the season and the treatment of the bulbs (forcing treatment with low temperatures) prior to planting. In the pulse-treatment with the chemicals elongation of the stems is restricted to about 5 cm and the flowers do not hang down. They do grow enough to show negative geotropism (movement of the stem segment just under the flower to vertical). Leaf yellowing is considerably delayed and petal life is considerably longer. The length of vase life, when considered to be ended by either the drooping of the stems, early leaf yellowing, or petal discoloration or wilting, is usually about 4 days in the control stems. In the pulse-treatment with the chemicals vase life varies between 8 and 11 days, depending on the repeat experiment.

### Example 2.

This example refers to longer treatment of the flowers in a solution, to be started by growers, transport, flower auctions, wholesalers, or retailers. The treatment can be terminated anywhere during the distribution chain. It can not be applied during display in retail outlets, as some tulips will be sold soon after display in the shop, and then have not been treated long enough. It can possibly be applied, therefore, at any point prior to the display stage at retailers. This treatment is longer than a pulse-treatment and therefore involves a relatively low concentration of all chemicals.

Tulip flowers (*Tulipa gesneriana*, cv. Leen van der Mark) are harvested in the morning, held in water for 4 hours at room temperature, then held dry for 2 hours at room temperature. The flowers are sleeved in transparent plastic without perforations, in bunches of 12 stems. Subsequently, the flowers are individually placed for 48 hours at 12°C in demineralised water or tap water, to which the following chemicals are added: 0.07-0.24 mM ethephon, 0.1-1.0 mM gibberellic acid (GA3), 0.05-0.25 mM benzyladenine, and 1-20 mM calcium chloride. The photon flux (from fluorescent lamps) is 15 micromoles per square metre, with the lamps being turned on for 12 subsequent hours per day and the flowers held in darkness for the remaining 12 hours. Alternatively, the photon flux is due to the natural light that enters a window or is zero (flowers held in darkness). The relative humidity is held at 60% or is the ambient humidity. Control flowers are held at the same conditions of light and humidity, and are placed in water or are held dry at 12°C for 48 hours. After treatment the stems are held dry for some period of time, to simulate a period of transport, or are transferred to demineralized or tap water.

The vase life of control flowers and treated flowers shows the same characteristics as the vase life of the flowers described under example 1.

## Claims

1. A floral composition suitable for preventing rapid stem elongation and prolonging vase life of cut tulips, comprising (A) an ethylene-releasing compound or an ethylene precursor, (B) a gibberellin, and (C) a cytokinin, the molar ratio (A) : (B) being between 0.1 and 2, the molar ratio (A) : (C) being between 0.3 and 5, and the molar ratio (B) : (C) being between 0.5 and 10.

2. A floral composition according to claim 1, the molar ratio (A) : (B) being between 0.15 and 0.6, the molar ratio (A) : (C) being between 0.5 and 2, and the molar ratio (B) : (C) being between 1.5 and 6.

3. A floral composition according to claim 1 or 2, further comprising a calcium salt, especially (D) calcium chloride, with a molar ratio (A) : (D) between 0.002 and 0.03, and/or a molar ratio (B): (D) between 0.01 and 0.15.

4. A floral composition according to any one of claims 1-3, wherein the ethylene-releasing compound is ethephon.

5. A floral composition according to any one of claims 1-4, wherein the gibberellin is gibberrelic acid.

6. A floral composition according to any one of claims 1-5, wherein the cytokinin compound is benzyl adenine.

7. Use of a combination of (A) an ethylene-releasing compound or ethylene precursor, (B) a gibberellin, and (C) a cytokinin, for preventing rapid stem elongation and prolonging vase life of cut tulips.

8. Use according to claim 7, wherein the combination is applied for a period between 1 and 18 hours using a concentration of 0.14-0.52 mM (A), 0.2-1.5 mM (B), 0.1-0.5 mM (C) and optionally 3-50 mM of a calcium salt.

9. Use according to claim 7, wherein the combination is applied for a period between 18 and 72 hours using a concentration of 0.07-0.24 mM (A), 0.1-1.0 mM (B), 0.05-0.25 mM (C) and optionally 1-20 mM of a calcium salt.

10. Use according to claim 7, wherein the combination is applied until discarding the tulips using a concentration of 0.04-0.10 mM (A), 0.2-0.5 mM (B), 0.01-0.05 mM (C) and optionally 1-20 mM of a calcium salt.
